# EUROPEAN PATENT APPLICATION

(11) **EP 4 597 934 A1**
(43) Date of publication of application: **06.08.2025**
(21) Application number: 23871485.1
(22) Date of filing: 07.08.2023
(51) Int. Cl.: H04L 12/28, G05B 19/05

(54) **CONTROL SYSTEM**

(30) Priority: 28.09.2022 JP 2022155137
(71) Applicant: Hitachi Industrial Equipment Systems Co., Ltd., Tokyo 101-0021 (JP)
(72) Inventor: SUDOH, Masayoshi, Tokyo 101-0021 (JP)
(74) Representative: MERH-IP Matias Erny Reichl Hoffmann Patentanwälte PartG mbB
(86) International application number: PCT/JP2023/028803
(87) International publication number: WO 2024/070243

(57) **Abstract**

A control system includes a control unit that has a Web server and two or more network ports, and a computation unit that has a Web server and a network port. The two or more network ports of the control unit include first and second network ports. The first network port of the control unit and the network port of the computation unit are coupled to a first network segment that is a closed network segment to which no elements other than the control unit and the computation unit are coupled. The control unit transfers data received from the interface unit to the computation unit, and also displays a Web server screen of the computation unit on a Web server screen of the control unit.

## Description

### [Technical Field]

The present invention relates to a control system.

### [Background Art]

Significant advance has been made in AI technology in recent years, and increased efficiency and increased precision of business through systems applying such technology is anticipated. For example, PTL 1 discloses a plant control system where increased precision and increased speed of plant control are realized by a flow of data exchange, in which I/O (Input/Output) data is handed to a general-purpose PC via a PLC (Programmable Logic Controller) for computation, and results thereof are output to the PLC.

### [Citation List]

### [Patent Literature]

[PTL 1] Japanese Patent Application Publication No. 2009-93375

### [Summary of Invention]

### [Technical Problem]

In conventional technology, rules to exchange data between the PLC and the general-purpose PC, i.e., dedicated communication protocols and commands, become necessary, making system design cumbersome. There also is concern that the load on the PLC will become great, since the processing capabilities of the PLC are used to process the dedicated protocols and commands. In light of the foregoing, it is an object of the present invention to provide a control system that realizes both usability and strengthened security.

### [Solution to Problem]

A control system includes a control unit that performs control of a system that is an object of control and that has a Web server and two or more network ports, and a computation unit that has a Web server and a network port. The two or more network ports of the control unit include first and second network ports. The first network port of the two or more network ports of the control unit, and the network port of the computation unit, are coupled to a first network segment that is a closed network segment to which no elements other than the control unit and the computation unit are coupled. The second network port of the two or more network ports of the control unit, and a network port of an interface unit are coupled to a second network segment that is different from the first network segment. The interface unit is a client that has a Web browser that displays a Web server screen. The control unit performs forwarding processing of transferring data received from the interface unit to the computation unit, and also displays a Web server screen of the computation unit on a Web server screen of the control unit.

### [Advantageous Effects of Invention]

A control system can be provided that has a high level of security.

### [Brief Description of Drawings]

[Fig. 1]

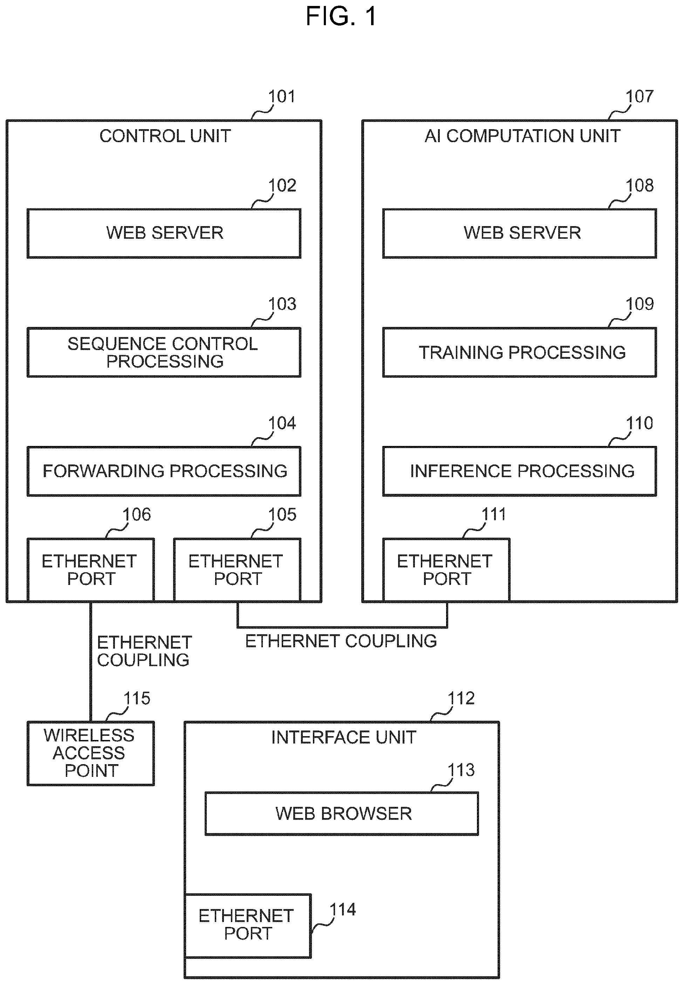

   Fig. 1 is a configuration example of a control system according to an embodiment of the present invention.
[Fig. 2]

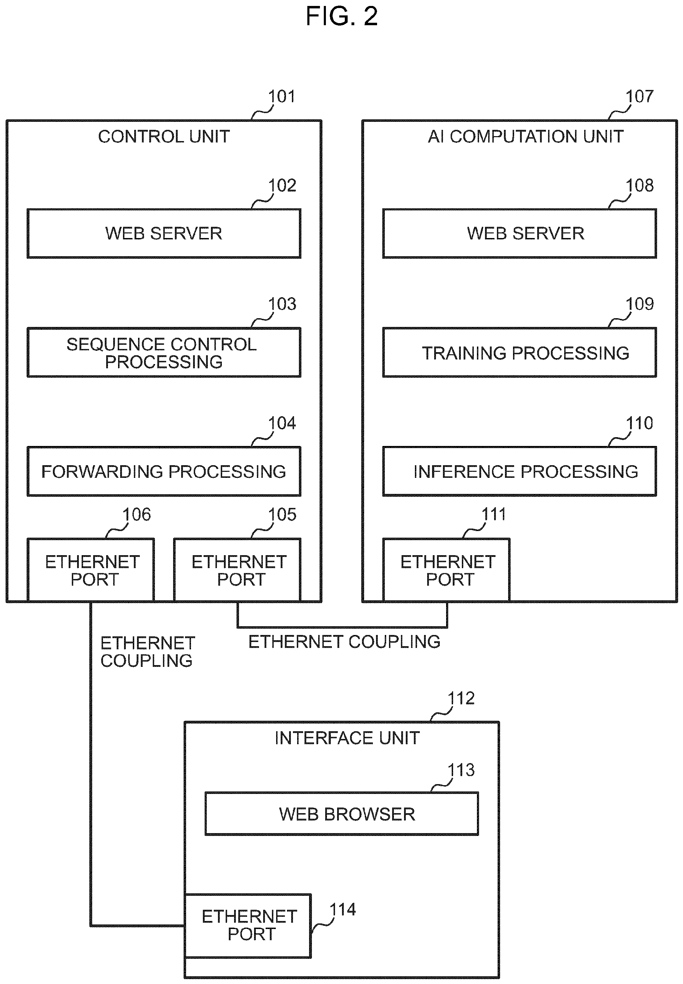

   Fig. 2 is a modification of Fig. 1.
[Fig. 3]

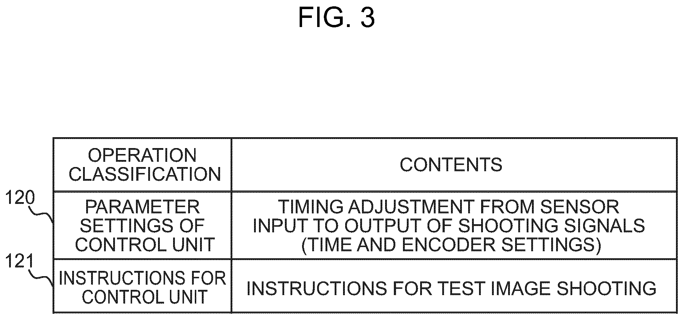

   Fig. 3 is an example of operating a control unit from an interface unit.
[Fig. 4]

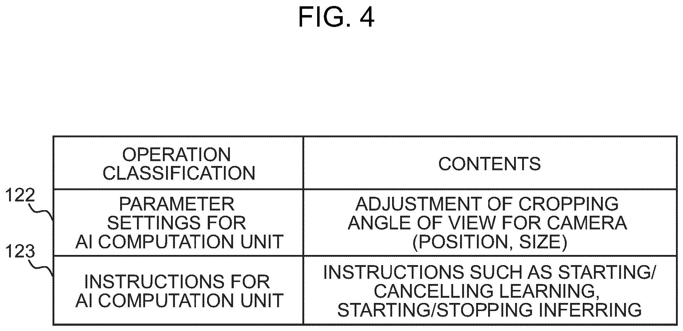

   Fig. 4 is an example of operating an AI computation unit from the interface unit.
[Fig. 5]

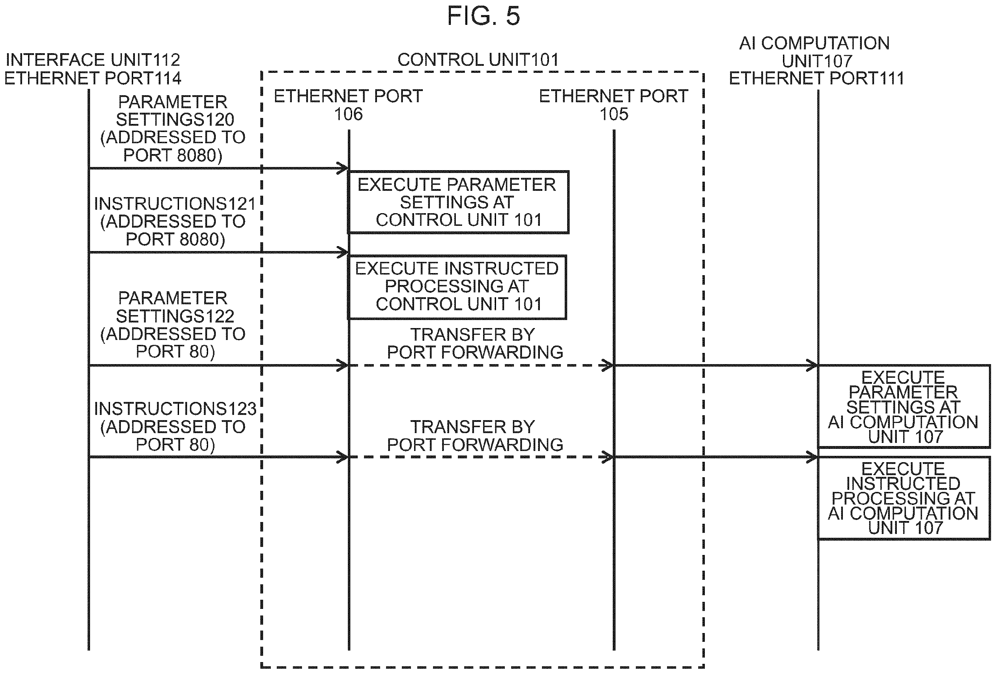

   Fig. 5 is a flow (1) of processing of operations 120 to 123 received from the interface unit.
[Fig. 6]

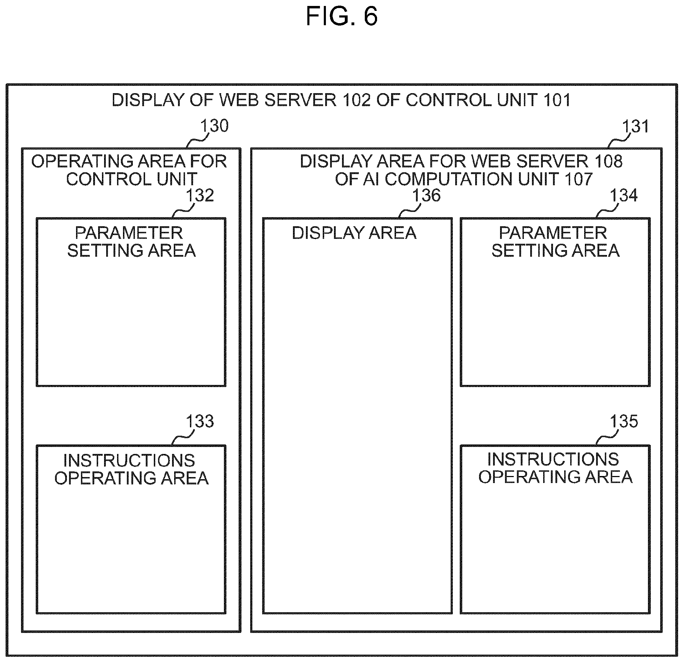

   Fig. 6 is an example of a screen display (1) on the interface unit.
[Fig. 7]

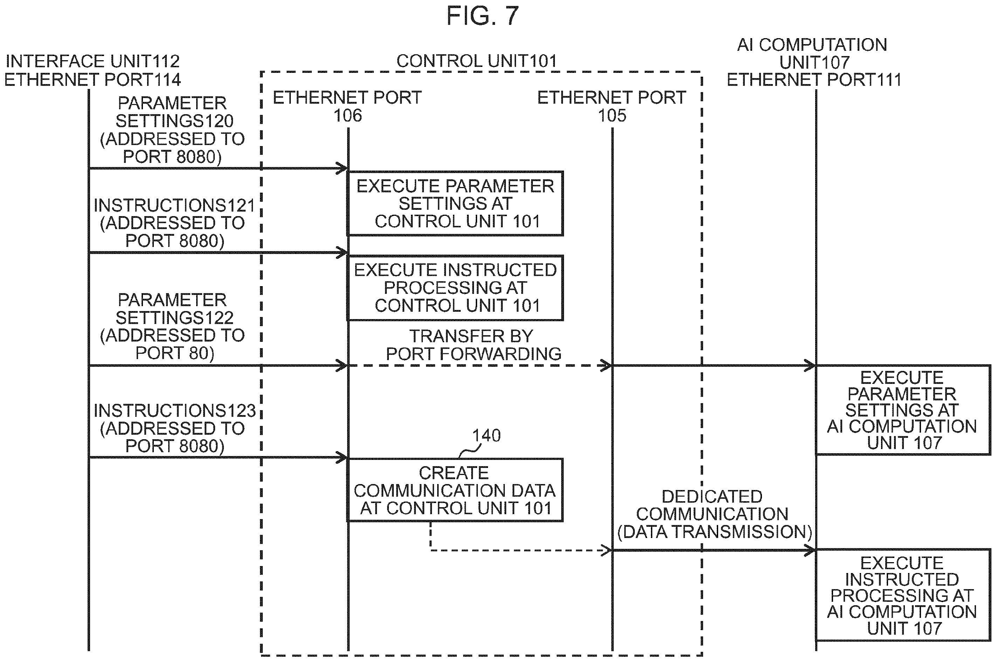

   Fig. 7 is a flow (2) of processing of the operations 120 to 123 received from the interface unit.
[Fig. 8]

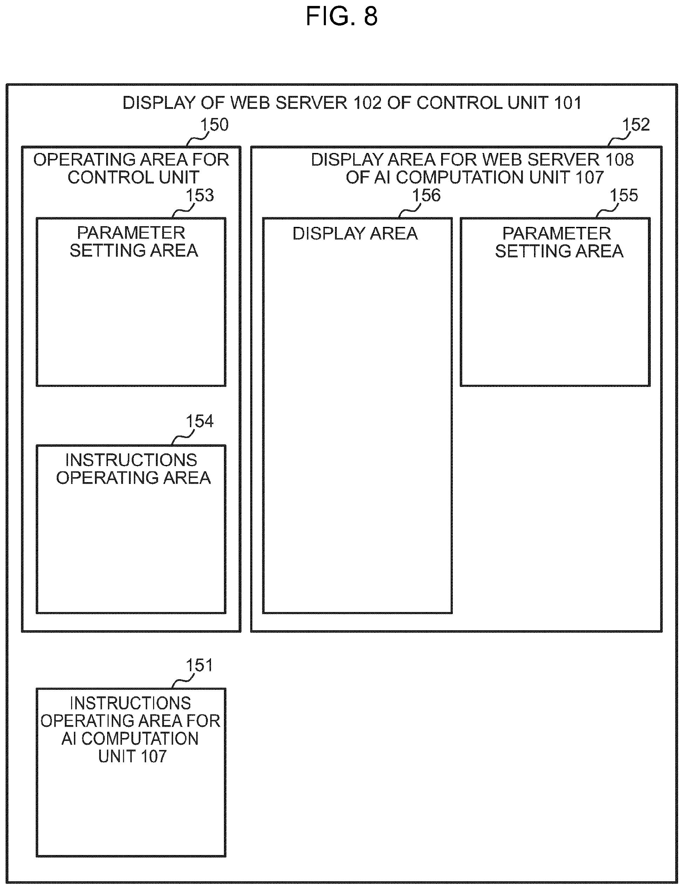

   Fig. 8 is an example of a screen display (2) on the interface unit.
[Fig. 9]

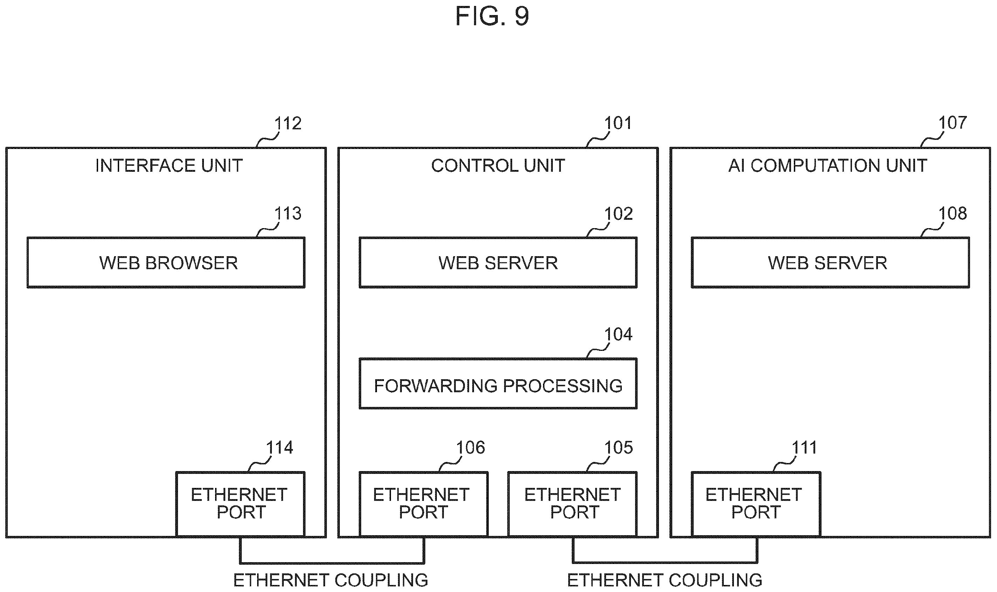

   Fig. 9 is an example of a coupling configuration of the interface unit, the control unit, and the AI computation unit.
[Fig. 10]

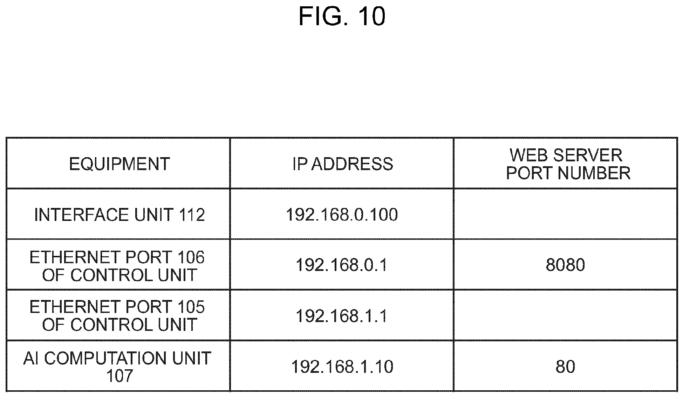

   Fig. 10 is an example of communication settings of the interface unit, the control unit, and the AI computation unit.
[Fig. 11]

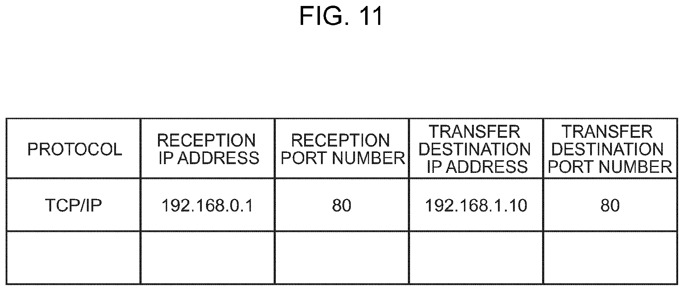

   Fig. 11 is an example of a transfer table for the control unit in the communication settings of Fig. 10.

An embodiment of the present invention will be described below with reference to the drawings. The following description and the drawings are an exemplification for describing the present invention, with omissions and simplifications being made as appropriate in order to clarify the description. The present embodiment can be carried out in various other forms as well. The components may be either singular or plural, unless specifically limited.

Positions, sizes, shapes, ranges, and so forth, of the components illustrated in the drawings may not represent actual positions, sizes, shapes, ranges, and so forth, in order to facilitate understanding of the invention. Accordingly, the present invention is not necessarily limited to the positions, sizes, shapes, ranges, and so forth, disclosed in the drawings.

### (Embodiment of Present Invention and Overall Configuration of System)

### (Fig. 1)

In a control system according to the present invention, a control unit 101 for controlling a system that is an object of control includes a Web server 102, and also sequence control processing 103 and forwarding processing 104 are running. Also, the control unit 101 includes two network ports, which are an Ethernet (registered trademark) port 105, and an Ethernet port 106. Note that the control unit 101 may have two or more network ports. The Ethernet port 105 and the Ethernet port 106 of the control unit 101 are disposed in different network segments from each other.

An AI computation unit 107 that performs machine learning under control of the control unit 101 includes a Web server 108, with training processing 109 and inference processing 110 running. The AI computation unit 107 includes an Ethernet port 111 for a one-on-one Ethernet coupling to the Ethernet port 105 that the control unit 101 has, and accordingly makes up a closed network segment to which no elements other than the control unit 101 and the AI computation unit 107 are coupled. This network segment is a first network segment.

An interface unit 112 includes a Web browser 113 for displaying a Web server screen. The interface unit 112 also includes an Ethernet port 114. The interface unit 112 is equipment that performs wireless communication, such as a tablet for example, and by coupling the Ethernet port 106 to a wireless access point 115, the control unit 101 is wirelessly coupled to the Ethernet port 114 that the interface unit 112 has. Accordingly, the Ethernet port 106 and the Ethernet port 114 are coupled to a second network segment that is different from the first network segment. Thus, network configurations that are independent from each other are established, and hence security can be secured.

Conventionally, in a case of a configuration in which two networks are independent, communication of data received from the interface unit 112 cannot be made to reach the AI computation unit 107 via the control unit 101 without change. However, the control unit 101 according to the present invention can cause data received from the interface unit 112 to reach the AI computation unit 107 disposed in a different network segment, due to the forwarding processing 104, which is for transferring data received from the interface unit 112 to the AI computation unit 107, running. Note that port forwarding or the like is employed as a method for realizing the forwarding processing 104.

Note that while omitted from illustration, the control unit 101 has, besides the Ethernet ports 105 and 106, memory, and a processor that is coupled to the memory and the Ethernet ports 105 and 106. The Web server 102 is realized by the processor executing a program stored in the memory, and the processor also executes the sequence control processing 103 and the forwarding processing 104.

The Ethernet port 105 above has been described as an example of a first network port, and the Ethernet port 106 as an example of a second network port. The control unit 101 is, for example, a control apparatus such as a PLC (e.g., an apparatus for controlling a system that is the object of control at defined control cycles, e.g., industrial equipment or some other equipment).

The AI computation unit 107 has, besides the Ethernet port 111, memory, and a processor that is coupled to the memory and the Ethernet port 111. The Web server 108 is realized by the processor executing a program stored in the memory, and the processor also executes the training processing 109 and the inference processing 110.

In the training processing 109, training of a machine learning model such as a neural network is performed. The machine learning model takes data of images shot by a camera, for example, as input, and outputs data representing classification of the image data (e.g., data representing labels of objects in the images expressed by the image data, or data expressing whether or not there is an abnormality in the objects). In the inference processing 110, inference is performed using a trained model. For example, the AI computation unit 107 is an examining apparatus that takes shot image data, which is an object of examining, as input, and infers whether or not there is an abnormality in the object of examining, from the images expressed by the shot image data. Also, the object of examining and the object of control may be different, or may be the same.

Also, the first and second network segments may be different segments of the same network, or may be different networks. Networks or network segments may be examples of communication media through which data is routed.

### (Fig. 2)

While Fig. 1 is a form in which wireless coupling is performed, as shown in Fig. 2, the present invention yields the same advantages even in a form in which the Ethernet port 106 that the control unit 101 has and the Ethernet port 114 that the interface unit 112 has are direct-wired coupled.

### (Fig. 3, Fig. 4)

An embodiment using the control system according to the present invention will be described. The control system according to the preset invention is used in an examining apparatus system or the like that executes from AI training to inference at on-site equipment (edge) without using a PC, for example. Such an examining apparatus includes a sensor unit that detects an examination item passing by, a camera unit that releases a shutter upon a signal being received from the control unit, and stores an image that is shot in the AI computation unit, a control unit that detects the examination item passing the sensor and releases the shutter of the camera unit, discharges defective items from a line under examination results at the AI computation unit, and so forth, the AI computation unit that imports the camera image in which the examination item is shot, and determines whether the external appearance of the examination item is good or defective, using learning results input to the trained model, and notifies the control unit thereof, and the interface unit that performs display and so forth of parameter settings for the control unit, and parameter settings, instructions, and results, for AI training at the AI computation unit.

Fig. 3 is an example of operating the control unit 101 from the interface unit 112 in a case of the control system according to the present invention being used in the above edge AI examining apparatus system. Operating the control unit 101 from the interface unit 112 can be generally classified into the two of parameter settings 120 of the control unit 101 and instructions 121 for the control unit 101. The parameter settings 120 for the control unit 101 include the amount of time necessary for timing adjustment from sensor input to output of shooting signals, encoder settings, and so forth. The instructions 121 for the control unit 101 include test image shooting and so forth.

Fig. 4 is an example of operating the AI computation unit 107 from the interface unit 112 in a case of the control system according to the present invention being used in the above edge AI examining apparatus system. Operating the AI computation unit 107 from the interface unit 112 can also be generally classified into the two of parameter settings 122 of the AI computation unit 107 and instructions 123 for the AI computation unit 107. The parameter settings 122 for the AI computation unit 107 include positions relating to adjustment of a cropping angle of view for the camera, adjustment of the size of the shooting image, and so forth. The instructions 123 for the AI computation unit 107 include instructions such as starting learning, cancelling learning, starting inferring, stopping inferring, and so forth.

By the control unit 101 running the forwarding processing 104, not only do the parameter settings 120 for the control unit 101 and the instructions 121 for the control unit 101 reach by communication received from the interface unit 112 such as illustrated in Fig. 3, but also parameter settings 122 for the AI computation unit 107 and the instructions 123 for the AI computation unit 107 can be made to reach the AI computation unit 107 by communication received from the interface unit 112 such as illustrated in Fig. 4.

### (Fig. 5)

Fig. 5 shows the flow of processing of operations 120 to 123 received from the interface unit 112, in a case in which the forwarding processing 104 of the control unit 101 is realized by port forwarding. The coupling configuration of the interface unit 112, the control unit 101, and the AI computation unit 107 at this time is as illustrated in Fig. 9.

The control unit 101 has a transfer table for distinguishing packets to be transferred to the AI computation unit 107, and packets for the control unit 101 to process itself. An example of the transfer table is shown in Fig. 11. In the forwarding processing 104 of the control unit 101, transfer processing is executed on the basis of this transfer table. Note that the transfer table in Fig. 11 is carried out in a case in which IP addresses of the interface unit 112, the control unit 101, and the AI computation unit 107 are each set as shown in Fig. 10.

Out of communication received from the interface unit 112, the parameter settings 120 and the instructions 121 regarding which processing is executed at the control unit 101 have the destination thereof set to the IP address: 192.168.0.1 and the port number: 8080 (see Fig. 10) for the Ethernet port 106 of the control unit 101, whereby an instruction is transmitted to the Ethernet port 106, and the processing of parameter settings and the processing instructed by the instructions 121 are thus executed at the control unit 101.

Conversely, the destination of the parameter settings 122 and the instructions 123 regarding which processing is executed at the AI computation unit 107 is set to the IP address: 192.168.0.1 and the port number: 80 (see Fig. 10) for the Ethernet port 106 of the control unit 101, so as to match the rules set in the transfer table (see Fig. 11). Thus, the instruction transmitted to the Ethernet port 106 of the control unit 101 is transferred from the Ethernet port 106 to the Ethernet port 105 by port forward, and is transmitted from the Ethernet port 105 to the Ethernet port 111 of the AI computation unit 107. Thus, the instruction is transferred from the control unit 101 to the AI computation unit 107, and the processing of the parameter settings 122 and the instructions 123 can be executed at the AI computation unit 107.

In a case of realizing the forwarding processing 104 of the control unit 101 by port forwarding, there is no need to deliver operations of the user instructed by the interface unit 112 from the control unit 101 to the AI computation unit 107 by bucket relay, and accordingly the processing load of the control unit 101 can be suppressed.

### (Fig. 6)

Fig. 6 is an example of a screen display on the interface unit 112. The Web server 102 of the control unit 101 is displayed in the Web browser 113 of the interface unit 112. The display of the Web server 102 of the control unit 101 is made up of two areas, which are an operating area 130 for the control unit, and a display area 131 of the Web server 108 of the AI computation unit 107.

The operating area 130 for the control unit 101 is made up of two areas, which are a parameter setting area 132 for performing the parameter settings 120 of the control unit 101, and an instructions operating area 133 for performing the instructions 121 to the control unit 101. The display area 131 for displaying the Web server 108 of the AI computation unit 107 is made up of three areas, which are a parameter setting area 134 for performing the parameter settings 122 of the AI computation unit 107, an instructions operating area 135 for performing the instructions 123 to the AI computation unit 107, and a display area 136 for displaying shot images of examination items and so forth.

In this way, the user can perform operation of two pieces of equipment, which are the control unit 101 and the AI computation unit 107, from a single user interface, in the system that is the object. Also, the user can operate the Web server screens of the control unit 101 and the AI computation unit 107 in a single screen, and accordingly an interface can be provided with enhanced security and further a sense of unity of the system, in which the user does not need to be aware of whether the object of operation is the control unit 101 or the AI computation unit 107. Also, the processing load on the control unit 101 is reduced.

### (Fig. 7)

As a modification of the flow of processing shown in Fig. 5, an example of a flow that realizes forwarding processing, 104 in which the control unit 101 transfers data received from the interface unit 112 to the AI computation unit 107, by a combination of port forwarding and dedicated communication, is shown.

First, processing of the operations 120 to 123 received from the interface unit 112, in a case in which the forwarding processing 104 of the control unit 101 is realized by the combination of port forwarding and a dedicated communication command, will be described below. In a case in which the forwarding processing 104 is realized by the combination of port forwarding and dedicated communication command, part of operations performed by the user that are transmitted from the interface unit 112 are delivered from the control unit 101 to the AI computation unit 107 partly by bucket relay. This realizes transfer of the instructions 123 by a dedicated communication command.

Delivering part of the user operations from the control unit 101 to the AI computation unit 107 by the dedicated communication command instead of forwarding enables the control unit 101 to recognize the user operations that are the object, as well. For example, in a case in which the control unit 101 also wants to know whether the AI computation unit 107 is currently learning, or is inferring, or what is being performed, changing the corresponding instructions from the user into a dedicated communication command causes the learning starting instruction issued from the interface unit 112 to be temporarily received at the control unit 101 and a learning starting command to be issued to the AI computation unit 107, and accordingly the control unit 101 can comprehend that the computation unit 107 is currently learning.

Upon the parameter settings 122 being issued from the interface unit 112, the parameter settings 122 transmitted from the Ethernet port 114 of the interface unit 112 to the Ethernet port 106 of the control unit 101 are transferred from the Ethernet port 106 of the control unit 101 to the Ethernet port 105 by port forwarding, and are transmitted from the Ethernet port 105 to the Ethernet port 111 of the AI computation unit 107, in accordance with the transfer rules (see Fig. 11), since the destination port number is set to 80, whereby the parameter settings 122 are processed at the AI computation unit 107.

Conversely, upon the instructions 123 being issued from the Ethernet port 114 of the interface unit 112, the instructions 123 are received by the Ethernet port 106 of the control unit 101, since the destination port number thereof is set to 8080. In the control unit 101, the contents of the instructions 123 are determined at the forwarding processing 104, and communication data to be transmitted to the AI computation unit 107 is created, by processing 140. The communication data that is created is transmitted from the Ethernet port 105 of the control unit 101 to the Ethernet port 111 of the AI computation unit 107, whereby processing of the instructions 123 is executed at the AI computation unit 107. The same advantages can thus be realized by the combination of port forwarding and dedication communication command as well.

### (Fig. 8)

Fig. 8 is a modification of the example of the screen display on the Web server 102 of the interface unit 112 illustrated in Fig. **6****.** In the Web browser 113 of the interface unit 112, the Web server 102 of the control unit 101 is displayed, and the display of the Web server 102 of the control unit 101 is made up of an operating area 150 for the control unit 101, an operating area 151 for the AI computation unit 107, and a display area 152 for the Web server 108 of the AI computation unit 107.

The operating area 150 is made up of a parameter setting area 153 for performing the parameter settings 120 for the control unit 101, and an instructions operating area 154 for performing the instructions 121 for the control unit. The reason that the operating area 151 is situated in the Web server 102 of the control unit 101 is for receiving instructions to the AI computation unit 107 at the control unit 101 and also for creating communication data for the AI computation unit 107.

The display area 152 of the Web server 108 of the AI computation unit 107 is made up of a parameter setting area 155 for performing the parameter settings 122 of the AI computation unit 107, and a display area 156 for displaying shot images of examination items and so forth.

According to the embodiment of the present invention described above, a router and so forth, which were conventionally necessary to sort communication in a case of securing independent routes, become unnecessary. Further, no discrepancy in communication occurs between the control unit 101 and the AI computation unit 107 due to communication command errors.

Note that description has been made in the present invention assuming Ethernet ports as an example of network ports, but the present invention is not limited to Ethernet ports for network ports, as long as equivalent advantages can be anticipated.

According to the embodiment of the present invention described above, the following effects and advantages can be obtained.
(1) A control system includes a control unit 101 that performs control of a system that is an object of control, and that has a Web server and two or more network ports, and an AI computation unit 107 that has a network port of a Web server. The two or more network ports of the control unit 101 include first and second network ports. The first network port of the control unit 101 and the network port of the AI computation unit 107 are coupled to a first network segment that is a closed network segment to which no elements other than the control unit 101 and the AI computation unit 107 are coupled. The second network port of the control unit 101 and a network port of an interface unit 112 are coupled to a second network segment that is different from the first network segment. The interface unit 112 is a client that has a Web browser that displays a Web server screen. The control unit 101 performs forwarding processing of transferring data received from the interface unit 112 to the AI computation unit 107, and also displays a Web server screen of the AI computation unit 107 on a Web server screen of the control unit 101. According to this arrangement a control system having a high level of security can be provided.
(2) The control unit 101 transfers the data received from the interface unit 112 to the AI computation unit 107 by port forwarding. According to this arrangement, the data received from the interface unit 112 can be made to reach the AI computation unit 107 that is disposed in a different network segment.
(3) The control unit 101 transfers the data received from the interface unit 112 to the AI computation unit 107 by a combination of port forwarding and a dedicated communication command. According to this arrangement, the data received from the interface unit 112 can be made to reach the AI computation unit 107 that is disposed in a different network segment, even in a different embodiment.
(4) Data transmitted from the interface unit 112 to the control unit 101 by the control system is one of a parameter setting and an instruction for the control unit 101, and data transmitted from the interface unit 112 to the computation unit 107 through the control unit 101 by the forwarding processing is one of a parameter setting and an instruction for the computation unit 107. According to this arrangement, parameter settings and processing of instructions can be executed at the AI computation unit 107.
(5) The control system further includes a sensor for detecting passage of an examination item and a camera for shooting the examination item in response to a shooting signal from the control unit. The control unit outputs the shooting signal to the camera in a case of receiving input from the sensor to an effect that passage of the examination item is detected, and the computation unit performs training of a model that takes images of examination items as input and outputs determination results of whether the examination items are good items or defective items, and inference of inputting images of the examination items shot by the camera into a trained model and thereby determining whether the examination items are good items or defective items. This enables use as an examining apparatus system that executes from AI training to inference at on-site equipment (edge).
(6) The parameter settings transmitted from the interface unit 112 to the control unit 101 are an amount of time for timing adjustment from input from the sensor to output of the shooting signal, and encoder settings. According to this arrangement, settings of the examining apparatus system can be realized.
(7) The parameter settings transmitted from the interface unit 112 to the AI computation unit 107 through the control unit 101 are a position relating to adjustment of a cropping angle of view for the camera, and adjustment of a size of a shooting image. According to this arrangement, settings of the examining apparatus system can be realized.
(8) Instructions transmitted from the interface unit 112 to the AI computation unit 107 through the control unit 101 are instructions of starting learning, cancelling learning, starting inferring, and stopping inferring. According to this arrangement, instructions to the examining apparatus system can be executed.

Note that the present invention is not limited to the above embodiment, and various modifications and combinations with other configurations can be made without departing from the spirit and scope thereof. Also, the present invention is not limited to including all configurations described in the above embodiment, and arrangements from which part of the configuration are omitted are included.

### [Reference Signs List]

- 101: Control unit
- 102: Web server of control unit 101
- 103: Sequence control processing of control unit 101
- 104: Forwarding processing of control unit 101
- 105: Ethernet port of control unit 101
- 106: Ethernet port of control unit 101
- 107: AI computation unit
- 108: Web server of AI computation unit 107
- 109: Training processing of AI computation unit 107
- 110: Inference processing of AI computation unit 107
- 111: Ethernet port of AI computation unit 107
- 112: Interface unit
- 113: Web browser of interface unit 112
- 114: Ethernet port of interface unit 112
- 115: Wireless access point
- 120: Parameter settings of control unit 101
- 121: Instructions for control unit 101
- 122: Parameter settings of AI computation unit 107
- 123: Instructions for AI computation unit 107
- 130: Operating area for control unit in first display example
- 131: Display area of Web server 108 of AI computation unit 107 in first display example
- 132: Parameter setting area for performing parameter settings
- 120: in first display example
- 133: Instructions operating area for performing instructions
- 121: in first display example
- 134: Parameter setting area for performing parameter settings
- 122: in first display example
- 135: Instructions operating area for performing instructions
- 123: in first display example
- 136: Display area for displaying shot images of examination item and so forth in first display example
- 140: Processing for creating communication data for AI computation unit 107
- 150: Operating area for control unit in second display example
- 151: Instructions operating area for performing instructions
- 123: in second display example
- 152: Display area of Web server 108 of AI computation unit 107 in second display example
- 153: Parameter setting area for performing parameter settings
- 120: in second display example
- 154: Instructions operating area for performing instructions
- 121: in second display example
- 155: Parameter setting area for performing parameter settings
- 122: in second display example
- 156: Display area for displaying shot images of examination item and so forth in second display example

## Claims

1. A control system, comprising:
a control unit that performs control of a system that is an object of control, and that has a Web server and two or more network ports; and
a computation unit that has a Web server and a network port, wherein
the two or more network ports of the control unit include first and second network ports,
the first network port of the two or more network ports of the control unit, and the network port of the computation unit, are coupled to a first network segment that is a closed network segment to which no elements other than the control unit and the computation unit are coupled,
the second network port of the two or more network ports of the control unit, and a network port of an interface unit are coupled to a second network segment that is different from the first network segment,
the interface unit is a client that has a Web browser that displays a Web server screen, and
the control unit performs forwarding processing of transferring data received from the interface unit to the computation unit, and also displays a Web server screen of the computation unit on a Web server screen of the control unit.

2. The control system according to claim 1, wherein
the control unit transfers the data received from the interface unit to the computation unit by port forwarding.

3. The control system according to claim 1, wherein
the control unit transfers the data received from the interface unit to the computation unit by a combination of port forwarding and a dedicated communication command.

4. The control system according to claim 1, wherein
the data transmitted from the interface unit to the control unit is one of a parameter setting and an instruction for the control unit, and
data transmitted from the interface unit to the computation unit through the control unit by the forwarding processing is one of a parameter setting and an instruction for the computation unit.

5. The control system according to claim 4, further comprising:
a sensor for detecting passage of an examination item; and
a camera for shooting the examination item in response to a shooting signal from the control unit, wherein
the control unit outputs the shooting signal to the camera in a case of receiving input from the sensor to an effect that passage of the examination item is detected, and
the computation unit performs
training of a model that takes images of examination items as input and outputs determination results of whether the examination items are good items or defective items, and
inference of inputting images of the examination items shot by the camera into a trained model and thereby determining whether the examination items are good items or defective items.

6. The control system according to claim 5, wherein
the parameter settings transmitted from the interface unit to the control unit are an amount of time for timing adjustment from input from the sensor to output of the shooting signal, and encoder settings.

7. The control system according to claim 5, wherein
the parameter settings transmitted from the interface unit to the computation unit through the control unit are a position relating to adjustment of a cropping angle of view for the camera, and adjustment of a size of a shooting image.

8. The control system according to claim 5, wherein
instructions transmitted from the interface unit to the computation unit through the control unit are instructions of starting learning, cancelling learning, starting inferring, and stopping inferring.
